# EUROPEAN PATENT SPECIFICATION

(11) **EP 3 261 444 B1**
(45) Date of publication and mention of the grant of the patent: **07.10.2020**
(21) Application number: 16701155.0
(22) Date of filing: 21.01.2016
(51) Int. Cl.: A01N 47/44, A01P 3/00

(54) **FUNGICIDAL COMPOSITION EFFECTIVE AGAINST ALTERNARIA ON CITRUS**
GEGEN ALTERNARIA AUF ZITRUS WIRKSAME FUNGIZIDE ZUSAMMENSETZUNG
COMPOSITION FONGICIDE EFFICACE CONTRE ALTERNARIA SUR CITRUS

(30) Priority: 23.01.2015 BE 201505036
(43) Date of publication of application: 03.01.2018
(73) Proprietor: Arysta LifeScience Benelux sprl, 4102 Ougrée (BE)
(72) Inventor: RAMAEKERS,, Lara, 3401 Walshoutem (BE)
(74) Representative: J A Kemp LLP
(86) International application number: PCT/EP2016/051206
(87) International publication number: WO 2016/116549

(56) References cited:
- EP-A1- 2 462 807
- WO-A1-2013/026470
- WO-A2-2011/108748
- US-A- 3 143 459
- US-B1- 6 342 522
- "Iminoctadine", The Pesticide Manual, 16th Edition online, 30 December 2012 (2012-12-30), XP055197113, Retrieved from the Internet: URL:http://pmonline.azurewebsites.net/_Mai n/Pesticide.aspx [retrieved on 2015-06-19]

## Description

### TECHNICAL FIELD

The invention pertains to the technical field of plant protection, in particular fungicides. More in particular it pertains to the use of dodecylguanidine or a salt thereof, such as dodine, as a fungicide effective against *Alternaria* on citrus. The invention describes formulations of dodine, methods of treating *Alternaria* on citrus with dodine and the use of said dodine formulations as fungicide for the treatment of *Alternaria* on citrus.

### BACKGROUND

Leaf spot disease on citrus is one of the main diseases causing losses of yield and economic value in citrus cultivation. Leaf spot disease can be caused by different fungus species. Since 1994 the first signs of *Alternaria alternata* on a citrus plant appeared in Spain and in 1998 the first leaf spot disease caused by *Alternaria alternata* was reported in the region around Valentia. By 2005 the *Alternaria alternata* was reported over 80 times in Spain and had spread to 7 provinces. Worldwide the disease has spread to all the major citrus producing countries.

Most countries, including Spain, only allow the use of copper based fungicides and mancozeb in the treatment of leaf spot disease on citrus. These fungicides only have a preventive activity. The short incubation time of the disease results in numerous applications of these fungicides to prevent the disease from spreading. Numerous applications cause a build-up of copper in the soil and the limitations used in organic farming, EC/473/2002 regulation by the European Union, are reached fairly soon, leaving the crop unprotected to *Alternaria alternata* infection. The authorization of mancozeb is currently under review in some countries. The future of this fungicide is unclear as its main metabolite ethyleenthioureum (ETU) is possibly carcinogenic.

In an attempt to reduce the number of treatments needed, a warning system is set up that registers the weather conditions and when the weather conditions are in favour for *Alternaria alternata citri* to grow, a warning is send out with the instruction to apply the fungicide. But even with this system in place the build-up of copper compounds in the soil reaches the limits over the years as crop rotation in citrus plantation is very slow due to the average lifespan of the citrus trees.

There is an urgent need for a fungicide that can prevent leaf spot disease on citrus. There is an interest to avoid build-up of copper in soil. It would be beneficial to find a fungicide that can be applied and is effective after infection of *Alternaria alternata* has been recorded.

The Pesticide Manual, 16th edition online ( http://pmonline.azurewebsites.net/_Main/Pesticide.aspx) describes the anti-fungal properties of iminoctadine, in particular the pre-harvest use of iminoctadine triacetate on citrus against *Alternaria.*

The present invention thereto aims to provide an alternative fungicidal composition for use in the treatment of *Alternaria* on citrus. In addition it aims to provide a method which overcomes at least one of the problems mentioned above.

### SUMMARY OF THE I NVENTI ON

In a first aspect the invention provides a use of dodecylguanidine or salt thereof, preferably dodine, as fungicide for the treatment of *Alternaria* on a citrus plant, wherein dodecylguanidine or salt thereof is applied at an interval of one or more of: at least two days before or after rainy periods; applying said dodecylguanidine or salt thereof every month; or within four days of an *Alternaria* warning on citrus.

Dodine has been proven effective in the treatment of Alternaria on citrus. It is advantageous that a well-known molecule, is found effective. Dodine is regarded to have no long term adverse effects.

In a second aspect the invention provides a method for controlling a plant disease, which comprises applying a dodecylguanidine or salt thereof, preferably dodine, to a plant in an effective dose, characterized in that said plant disease is *Alternaria* and said plant is a citrus plant, and wherein the dodecylguanidine or salt thereof is applied at an interval of one or more of: at least two days before or after rainy periods; applying said dodecylguanidine or salt thereof every month; or within four days of an *Alternaria* warning on citrus.

A method comprising the application of dodine as a fungicide can be regarded as a valuable alternative to known treatments. It provides farmers with more possibilities to control a deleterious disease on citrus fruits. Dodine treatments are without a build-up of copper compounds in the soil. There is no formation of ETU, hence concerns regarding its toxicology profile are avoided.

### FIGURES

**Fig. 1** is a graphic representation of the weather conditions at the site of the orange plantation.
**Fig. 2** is a boxplot of the first analysis of leaf spot disease on the sprouts of mandarin trees, treated with or without dodine.
**Fig. 3** is a boxplot of the weight of fruits produced for each tree.
**Fig. 4** is a boxplot of the percentage of fruits classified in the Extra Class for each tree.
**Fig. 5** is a boxplot of the percentage of fruits classified in the Extra Class and the Class 1 for each tree.
**Fig. 6** is a boxplot of the percentage of fruits classified as marketable, the Extra Class, Class 1 and Class 2, for each tree.
**Fig. 7** is a boxplot of the percentage of fruits classified as Out of grade, for each tree.
**Fig. 8** is a graphical presentation of the dodine concentration dependence of the growth inhibition of *Alternaria alternata on citrus.*
**Fig. 9** is a graphical presentation of the percentage of fruits in the category Extra (Y-axis) from a 2014 field trial with Syllit SC (dodine 544 g/l). Presented in the X-axis are the results from the spring treatment with Syllit (A), autumn treatment with Syllit (B), combination of results from spring and autumn treatment with Syllit (C) and the control group with no treatment (D).

### DETAILED DESCRIPTION OF THE INVENTION

"About" as used herein referring to a measurable value such as a parameter, an amount, a temporal duration, and the like, is meant to encompass variations of 35 +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

The recitation of numerical ranges by endpoints includes all numbers and fractions subsumed within that range, as well as the recited endpoints.

The expression "% by weight" or "wt%" (weight percent), here and throughout the description unless otherwise defined, refers to the relative weight of the respective component based on the overall weight of the formulation.

The present invention is based on the finding that dodine can effectively control brown spot disease on citrus plants, especially on citrus and tangerine.

The causal agent of brown spot disease on citrus plant is *Alternaria.* The term *"Alternaria"* as used herein refers to a genus of *Ascomycota* fungi that can be divided in a large number of species. *Alternaria citri,* alternatively named *Alternaria alternata,* is a species growing on lemons, oranges and other citrus fruits.

The term "citrus" as used herein refers to "a citrus plant", i.e. fruit or tree of the genus Citrus, preferably selected from the list of citrus, mandarine, clementine, tangerine, orange, kumquat, lemon, lime, grapefruit, pomelo, citrange, citron.

Alternaria species are known as major plant pathogens. Some strains of Alternaria alternata (Fr.) Keissl. are known to produce host-selective toxins (HST) that are selectively toxic to certain plants. This selectivity correlates to the pathogenicity reactions of the fungi that produce them. Therefor to distinguish further, pathotypes are defined.

On citrus plants, two pathotypes can be distinguished, in particular *A. alternata* lemon pathotype and *A. alternata* tangerine pathotype. The lemon pathotype is the causal agent of brown leaf spots on young leaves of lemon and lime. The A. alternata tangerine pathotype causes brown leaf spots on young leaves of tangerine and mandarin.

Citrus varieties susceptible to the disease include Fortune, Mineola and Nova.

In a first aspect the invention provides a use of dodecylguanidine or salt thereof, preferably dodine, as fungicide for the treatment of *Alternaria* on a citrus plant, wherein dodecylguanidine or salt thereof is applied at an interval of one or more of: at least two days before or after rainy periods; applying said dodecylguanidine or salt thereof every month; or within four days of an *Alternaria* warning on citrus.

As mentioned above, a preferred embodiment of dodecylguanidine salt is dodine. Dodine or 1-dodecylguanidiniumethanoate is a salt of n-dodecylguanidine and acetic acid. It has the chemical structure shown below by formula I and has CAS 2439-10-3 assigned to this molecule.

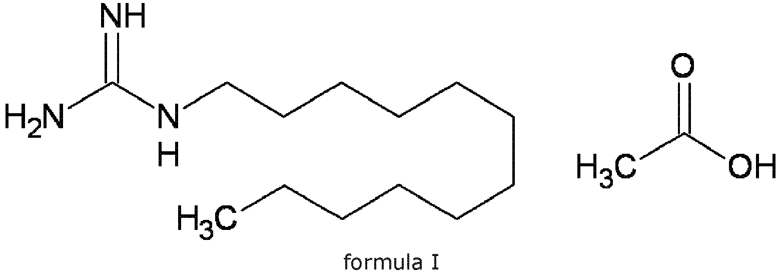

Alternatively, the acid can be a monocarboxylic acid such as propionic, capric, stearic, benzoic, or naphtoic acid; or a dicarboxylic acid such as malonic or succinic acid; or a mineral acid such as hydrochloric, sulphuric, bisulphuric or nitric acid.

In a preferred embodiment, dodine is the only antifungal active ingredient in the composition used in the invention. Dodine is regarded as a slightly hazardous compound by the world health organisation (WHO) classification III. A combination with another anti-fungal active ingredient could cause a different, less favourable, classification.

In a preferred embodiment, the composition does not contain any compounds containing copper, copper ions or metallic copper. The use of a copper-free composition has the advantage that no copper compounds build up in the soil and that the copper content of the soil stays under the limitations of organic agriculture defines by the European Union in EC/473/2002 regulation.

In preferred embodiment, the composition is a wettable powder. A wettable powder has the advantage that no water or solvent needs to be shipped or stored, suppressing the cost of transport and storage. The chemical stability of the active ingredient can be prolonged in a dry environment.

In preferred embodiment, the composition is in the form of water dispersible granules (WG or WDG). Water dispersible granule formulations have the advantage that no water or solvent needs to be shipped or stored, suppressing the cost of transport and storage. The chemical stability of the active ingredient can be prolonged in a dry environment. When handling wettable granules, no or very little dust is generated in comparison to handling a powder. Handling granules versus a powder reduces inhalation toxicity. When handling a wettable powder extra precaution needs to be taken to prohibit the inhalation of the dust. When finishing a package of wettable granules, less active ingredient remains in the packaging material than when finishing a package of wettable powder, having an economical and an ecological advantage.

In another preferred embodiment, the composition is a suspension concentrate (SC) of dodine. Preferably the SC formulation comprises water as solvent. The concentrate can be diluted to the desired concentration needed for the treatment of the disease, and the handling of a liquid doesn't generate the same level of exposure to dodine for the person handling the composition, as when handling a powder. Obtaining a correct concentration starting from a liquid concentrate is easier than using a powder to obtain a correct concentration. Liquids can be measured out by their volume, as for solids and especially powder, large variations are made when using a volume of a solid due to different compression of the solid. To obtain a correct concentration using a solid, scales need to be used instead of a simple measuring cup when using a liquid.

In another preferred embodiment, a composition used according to the invention comprises as active ingredient dodine and an inert support material. In a preferred embodiment said support material is pulverulent solid material and the composition is a mixture of the active ingredient in powder form and the support material. In a more preferred embodiment, a composition for use in the invention is a flow (FL) formulation of dodine.

In a preferred embodiment, the fraction of active ingredient, preferably dodine, in a suspension concentrate of the invention is preferably 40%-80% by weight, in particular 45%-60% by weight, more preferably 50%-55% by weight, expressed versus the total weight of the composition.

In a preferred embodiment, the fraction of water in a suspension concentrate of the invention is 20%-60% by weight, preferably 30%-45% by weight, more preferably 35%-40% by weight, expressed versus the total weight of the composition.

In a preferred embodiment of the invention, the active ingredient, preferably dodine, is present with a minimum content of 400 g of active ingredient/I, preferably 440-820 g of active ingredient/I, more preferably 544 g/l or 600 g/l of active ingredient/I of the overall formulation, most preferably 544 g/l.

Particle size is typically defined as a log-normal distribution with a median diameter or d₅₀ - that is 50% of the particles measured are less than the median value and 50% are greater than the median value. The term "particle size distribution" as used herein refers to the relative percentages by weight or volume of each of the different size fractions of a particulate matter. The term "median particle size", "median diameter of particles", "dso", as used herein refers to the median or 50% quantile of a particle size distribution. The term "d₅₀" hence defines a size where 50 volume percent of the particles have sizes less than the value given.

In spite of the large particle size, suspension concentrate formulations with a median particle diameter of 7 µm to 20 µm had a viscosity below 1500 cPS. This is workable and allows the preparation of formulations with relatively high concentration.

In a preferred embodiment, d₅₀ is below 20 µm. Preferably d₅₀ is between 7-20 µm, more preferably d₅₀ is 8-15 µm, most preferably d₅₀ is 9-10 µm. Within this range the SC-formulation, even if highly concentrated, remains stable upon prolonged storage.

A suspension concentrate of the invention is preferably characterized in that 50% of the particles of the overall formulation, preferably 50% of the particles of the active ingredients (component a), have a size of at least 7 µm (d50>=7 µm).

More preferably 60%, even more preferably 80%, most preferably more than 90%, of the a.i. particles of the overall suspension concentrate have a size of at least 7 µm.

In a preferred embodiment at most 2% of the a.i. particles have a particle size of at least 75 µm (d₉₈).

The particle size distributions for formulations can be measured using laser light diffraction equipment, such as are sold by Malvern Instruments Ltd., Malvern, Worcestershire, United Kingdom.

It is additionally possible to add further formulation auxiliaries to these formulations of a dodecylguanidine or salt thereof (a), such as anti-freeze compounds (b), wetting agents(c1), dispersing agents (c2), antifoaming agents (d), preservatives (e), or dyes (f).

These formulation auxiliaries are described for example in Chemistry and Technology of Agrochemical Formulations, ed. D.A. Knowles, Kluwer Academic Publishers (1998) and Controlled - Release Delivery Systems for Pesticides Herbert B. Scher, Marcel Dekker, Inc. (1999).

The fraction of these formulation auxiliaries in a suspension concentrate of the invention is preferably 1%-30% by weight, in particular 2%-15% by weight, more preferably 5%-10% by weight, expressed versus the total weight of the composition.

In a preferred embodiment of the invention, the anti-freeze compound (component b) is selected from the list of glycols, glycerols, urea and mixtures thereof.

In a preferred embodiment, the anti-freeze compound (component b) is a glycol selected from the list of ethylene glycol, diethylene glycol, triethylene glycol, propylene glycol, dipropylene glycol, tripropyleneglycol, glycerol, and mixtures thereof.

In a particularly preferred embodiment, the anti-freeze compound is propylene glycol.

The term "surfactant"-which includes the terms "emulsifier" and "detergent"-as used herein means a composition of matter that either alters surface tension when dissolved in water or an aqueous solution, or alters interfacial tension between immiscible liquids or a liquid and a solid.

Surfactants (c) suitable for purposes of the present invention are listed in McCutcheon's Emulsifiers & Detergents, at pages 287-310 of the North American Edition (1994), and in McCutcheon's Emulsifiers & Detergents, at pages 257-278 and 280 of the International Edition (1994), both published by MC Publishing Co. (McCutcheon Division) of Glen Rock, N.J.

In this regard, suitable surfactants include, but are not limited to, alkylamine ethoxylates, acrylate graft copolymer ethoxylates, block polymers, carboxylated alcohol or alkylphenol ethoxylates, alcohol ethoxylates, ethoxylated alkylphenols, glycol esters, polyethylene glycols, silicone-based surfactants, and tristyrylphenol ethoxylates.

In a preferred embodiment, the surfactant is an acrylate graft copolymer. An example of a suitable surfactant (c) for use formulations according to the present invention is an acrylate graft copolymer, e.g. commercially available under the name Tersperse 2500 (Huntsman). This surfactant is easily soluble in water and acts as a dispersant.

Preferred surfactants are selected from the group consisting of wetting agents, dispersing agents and mixtures thereof.

In a preferred embodiment the wetting/dispersing agent is not an anionic wetting or dispersing agent. Incompatibility with dodine is thereby avoided. In a more preferred embodiment, the dispersing/wetting agent is non-ionic.

Wetting agents serve to reduce the surface tension at the water-solid interface and therefore increase the tendency of the water to contact the complete surface of the active ingredient particles.

In a preferred embodiment of the invention, the wetting agent (component c1) is an ethoxylate. In a particularly preferred embodiment of the invention, the wetting agent (component c1) is selected from the list of alkylamine ethoxylates, alkylphenol ethoxylates, alcohol ethoxylates, and tristyrylphenol ethoxylates.

In a preferred embodiment the wetting agent (component c1) is an alkylamine ethoxylate. Examples of alkylamine ethoxylate wetting agents (component c) suitable for use in the present invention are Rhodameen RAM 7 (Rhodia) or Emulson AG/NHT (Cesalpina). The advantage of this surfactant is that it acts as an emulsifier and shows a high degree of compatibility with dodine.

In another preferred embodiment the wetting agent (component c1) is an alcohol ethoxylate. Alcohol ethoxylates are prepared from saturated or unsaturated, linear or branched aliphatic alcohols having on average from 8 to 20 carbon atoms, and which contain from 5 to 25, typically from 10 to 20, ethylene oxide units per molecule. Preferred are alcohol ethoxylates which contain from 12 to 18 carbon atoms in the alcohol moiety and 10 to 20 ethylene oxide units.

Examples of alcohol ethoxylates are Brij, Volpo, Arlasolve, Atphos, Synperonic and Lubrol, Synperonic 91-6, Atplus MBA 11-7 (Uniqema).

Examples of tristyrylphenol ethoxylate wetting agents (component c1) are Soprophor® 3D33 (=tristyrylphenol ethoxylated with 16 EO and phosphated), Soprophor® BSU (=tristyrylphenol ethoxylated with 16 EO), Soprophor® CY/8 (Rhodia) (=tristyrylphenol ethoxylated with 20 EO), and Hoe® S3474 (=tristyrylphenol ethoxylated with 20 EO) and in the form of the Sapogenat® T product (Clariant), such as Sapogenate T 100 (=triisobutylphenol ethoxylated with 10 EO), for example.

The fraction of surfactants in a suspension concentrate of the invention is preferably 0.5%-10% by weight, preferably 1%-5% by weight, more preferably 2%-4% by weight, most preferably around 3% by weight.

In a preferred embodiment of the invention, the weight ratio of wetting agent to a dodecylguanidine or salt thereof, preferably dodine, is between 1/8 to 1/80, preferably between 1/10 to 1/25, more preferably between 0.04-0.06.

The term "dispersant" or "dispersing agent" (c2) as used herein connotes a surface-active agent that is added to suspending media to promote uniform suspension or separation of solid particles, often of micrometre size.

Dispersants (components c2) are listed in McCutcheon's Functional Materials, at pages 122-142 of the North American Edition (1994), as well as in McCutcheon's Functional Materials, at pages 47-56 of the International Edition (1994), both published by MC Publishing Company (McCutcheon Division) of Glen Rock, N.J.

In this regard, suitable dispersants for use in the present invention include, but are not limited to, acrylate graft copolymers. Examples of acrylate graft copolymer dispersing agents (component c2) are commercially available as Tersperse 2500 (Huntsman).

In a preferred embodiment of a composition used according to the invention, the wetting agent and/or the dispersing agent are an ethoxylated alkylamine and/or an acrylate graft polymer, preferably a combination of these two ingredients.

The term "antifoaming agent" or "foam-control" agent (d) or ingredient shall be understood to mean a substance that is used to reduce foaming. Foaming may result from the presence of foam-inducing agents as proteins, gases, or nitrogenous materials. The presence of foam is generally undesirable because foam may interfere with processing, e.g. application by spraying.

Antifoaming agents are generally discussed at pages 430-447 in the Kirk-Othmer Encyclopaedia of Chemical Technology, third edition, volume 7, published 1979 by John Wiley & Sons, Inc.

Suitable antifoaming agents (component d) for purposes of the present invention include but are not limited to silicone-based defoamers, from Wacker, Rhodia or Dow Corning, for example; acetylene-based defoamers, such as those from Air Products, for example, and perfluoroalkylphosphinic acid and phosphonic acids and their salts.

Preferred defoamers are those from the group of linear polydimethylsiloxanes having an average dynamic viscosity, measured at 25 °C, in the range from 1000 to 800 mPa.s, usually 1200 to 6000 mPa.s, and containing silica. Silica includes polysilicic acids, meta-silicic acid, ortho-silicic acid, silica gel, silicic acid gels, kieselguhr, precipitated SiO2, and the like.

Defoamers from the group of linear polydimethylsiloxanes contain as their chemical backbone a compound of the formula HO-[Si(CH3)2-O-]n-H, in which the end groups are modified, by etherification for example, or are attached to the groups -Si(CH3)3. Examples of defoamers of this kind are Rhodorsil® Antifoam 416. Other suitable defoamers are Rhodorsil® 1824, Antimussol 4459-2 (Clariant, Defoamer V4459 (Clariant), SE Visk and AS EM SE 39 (Wacker).

Particularly preferred are polydimethylsiloxane, wherein two methyl groups are attached to each silicon atom to form (H₃C)[SiO(CH₃)₂]ₙSi(CH₃) and simethicone, which is a mixture of polydimethylsiloxane and silica.

An example of a suitable defoamer for use in the compositions described herein is commercially available as Rhodorsil® 481 and Rhodorsil® 454 (polydimethylsiloxane and silicon) from Rhodia.

An aqueous suspension concentrate for use according to an embodiment of the invention may further comprise e) a thickening agent and/or f) a preservative.

A suitable thickening agent (component e) for use in the present invention is a hydroxyethylcellulose, a gelling and thickening agent derived from cellulose. Especially preferred is hydroxyethylcellulose surface-treated with glyoxal.

Suitable preservatives (component f) are biocidal compounds, an example being 1,2-Benzisothiazolin-3-one, and MBS (mixture of 1,2-benzoisothiazol-3(2H)-one and 2-methyl-2H-isothiazol-3-one, biocide.

In a preferred embodiment, the suspension concentrate for use in the invention further comprises e) a thickening agent and/or f) a biocidal compound in a concentration of up to 1%, expressed by weight based on the total weight of the composition.

In a preferred embodiment, the composition comprises:
a) 40 to 80% a dodecylguanidine or salt thereof, preferably dodine
c) 1 to 10% wetting agent and/or dispersing agent,
g) remainder water;
all percentage are expressed by weight based on the total weight of the composition.

In a preferred embodiment, the composition also comprises up to 10% of an anti-freeze compound.

In a preferred embodiment, the suspension concentrate for use in the invention comprises, expressed by weight based on the total weight of the composition:
a) 45 to 60% a dodecylguanidine or salt thereof, preferably dodine;
b) 1 to 5% anti-freeze compound,
c) 1 to 5% wetting agent and up to 2% of a dispersing agent
d) up to 2% antifoaming agent, and
g) remainder water.

In a preferred embodiment, a composition for use according to the invention further comprises an anti-foaming agent and/or a thickening agent.

In a preferred embodiment, the suspension concentrate for use according to the invention comprises, expressed by weight based on the total weight of the composition:
a) 50 to 55% a dodecylguanidine or salt thereof, preferably dodine;
b) 3% anti-freeze compound,
c) 3% wetting agent and 1% dispersing agent,
d) 1% antifoaming agent,
e) 0.1% thickener,
f) 0.1% preservative, and
g) remainder water.

With a suspension concentrate comprising dodine of an average particle size between 7 and 20 µm it is generally possible to achieve an equal or better biological effect for the same application rate compared to dodine of a classical average particle size below 5 µm. Due to the larger particle size versus conventional formulations, the formulation is less toxic by inhalation to humans.

A highly-concentrated suspension concentrate for use according to the invention permits the associated advantages, such as a lower level of packaging, as a result of which the cost and complexity involved in producing, transporting, and storing is simplified and the preparation of spray liquors used in agriculture can be managed more effectively as a result of the smaller quantities, such as in the context of dispensing operations and stir-mixing operations, for example.

Use of a highly loaded dodine suspension concentrate in the invention allows to save on transportation costs. This contributes to the overall objective of ecological farming.

Additionally the suspension concentrates described produce formulations which are stable on storage for long periods.

The description further provides compositions obtainable from the suspension concentrate of the invention by dilution with liquids, preferably aqueous liquids, more preferably water.

In a second aspect the invention provides in a method of treating *Alternaria alternata,* on citrus and/or on citrus trees.

In a preferred embodiment, a dodecylguanidine or salt thereof, preferably dodine; is applied in an effective dose between 300 g and 3000 g per hectare, more preferably between 500 and 2000 g per hectare, even more preferably between 600 and 1500 g per hectare and most preferably between 680 g and 1200 g per hectare.

In another preferred embodiment, a dodecylguanidine or salt thereof, preferably dodine; is applied in an effective concentration between 0.2 g/l and 10 g/l, preferably between 0.5 g/l and 7 g/l, more preferably between 0.7 g/l and 5 g/l, even more preferably between 1 g/l and 3 g/l and most preferably between 1.3 g/l and 2 g/l.

An effective concentration is applied on a tree in an amount between 1 liter/tree and 15 liter/tree, preferably between 2 liter/tree and 13 liter/tree, more preferably between 3 liter/tree and 10 liter/tree, even more preferably between 4.5 liter/tree and 7 liter/tree and most preferably between 5 liter/tree and 6 liter/tree.

In yet another preferred embodiment, between 0.5 g and 15 g of a dodecylguanidine or salt thereof, preferably dodine; is applied on one tree at each application, preferably between 1 g and 10 g, more preferably between 2.5 g and 7.5 g, even more preferably between 4 g and 6g and most preferably 5 g for each tree.

The method of applying of the present composition is preferably by foliage spraying. It is usually applied after diluting with water.

In a preferred embodiment, the suspension is applied preferably 2 weeks, more preferably 1 week, and even more preferably 4 days. These rainy periods are usually more abundant in spring or autumn.

In a preferred embodiment, applications can be done on growing or mature fruit to protect the esthetics of the peel.

In a preferred embodiment, the suspension is applied preferably once every month, more preferably once every 3 weeks and most preferably once every 2 weeks. Dodine was found to have a preventative, curative and eradicant effect on *Alternaria* on citrus and/or citrus trees.

The treatment may be curative or preventive.

In another preferred embodiment, application of a composition comprising dodine is combined with the use of a warning system for the occurrence of conditions that favor *Alternaria* on citrus. The warning system may take into account weather conditions, preferably temperature and/or rainfall. In a further preferred embodiment, the warning system generates a suggestion for fungal application when:
- the average day temperature in the last period of time, preferably 5, 7, 10 or 14 days is higher than a certain value, preferably 10 °C, more preferable more than 12.5 °C; and/or,
- the amount of rainfall in said last period of time is higher than 1 mm, preferably higher than 2 mm, most preferably 2.5 mm.

The combination of dodine applications with a warning system allows to keep the number of sprays to a minimum. It allows for optimal product application.
In a preferred embodiment of a method or use according to the invention, a composition comprising dodecylguanidine or salt thereof, preferably dodine, is applied within four days, preferably within three days, more preferably within two days and most preferably within one day of an *Alternaria*-warning on citrus.
Alternatively, the treatment may comprise a further active ingredient. The present composition can be used with one or more fungicides, insecticides, miticides, nematicides, herbicides, plant growth regulating agents, fertilizers or soil improvers. The active ingredients can be applied simultaneously or consecutively.

In another aspect, the invention provides a use of a composition comprising dodecylguanidine or salt thereof, preferably dodine, as fungicide against *Alternaria alternata.* This disease is devastating to citrus trees. Availability of an alternative fungicide, approved under the European Plant Protection Directive (EC 91/414) is highly desirable and economically relevant.

In the invention, a composition comprising dodecylguanidine or salt thereof, preferably dodine, is used as a fungicide for the treatment of *Alternaria* on citrus trees.

Most preferably, dodecylguanidine or salt thereof, preferably dodine, is used for the control of *Alternaria alternata* tangerine pathotype or *Alternaria alternata* lemon pathotype.

In a preferred embodiment, a composition comprising dodecylguanidine or salt thereof, preferably dodine is used as a fungicide for the treatment of *Alternaria* on citrus trees to increase the quality of citrus fruit compared to untreated fruit as measured according to the international quality standard for citrus established by the Organisation for Economic Co-operation and Development (OECD) in 2010. The present invention will be now described in more details, referring to examples that are not limitative.

### EXAMPLES

### Example 1: Wettable powder comprising dodine (dodine 65 WP)

In a first example, a composition comprising dodine is provided in the form of a wettable powder, as displayed in Table 1.

**Table 1: wettable powder (dodine 65 WP)**

| Composition | Amount (% w/w) |
|---|---|
| Dodine | 65 |
| Aluminium silicate hydrate | 10-30 |
| Sodium di-hexyl sulphosuccinate | 1-5 |
| Silica | >1 |

### Example 2: Suspension concentrate comprising dodine (dodine 544 SC)

In a second example a composition comprising dodine is provided in the form of a suspension concentrate, as displayed in Table 2.

**Table 2: suspension concentrate comprising dodine (dodine 544 SC)**

| Composition | Amount (g/l at 20 °C) |
|---|---|
| Dodine (expressed as 100% active) | 544 |
| Wetting agent/dispersing agent | 40 |
| Propylene glycol | 30 |
| Water | Remainder |

### Example 3: Method for treating and preventing Alternaria alternata on a citrus plant using dodine

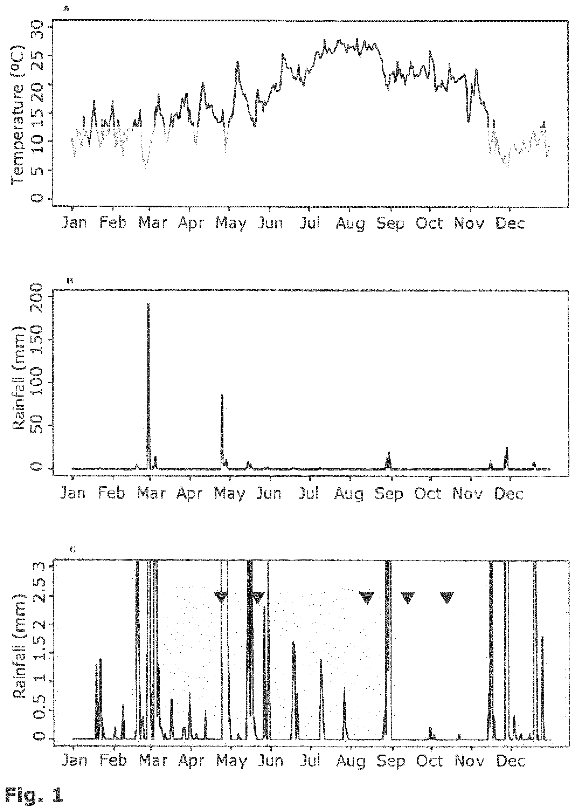

The following method of combatting *Alternaria alternata* on a citrus plant was tested. On a plot of mandarin trees of the variety "Nova" in the province of Valentia (Spain) that was strongly affected by citrus leaf spot disease a trial with dodine was carried out. The test group and the group treated with the composition comprising dodine consisted of 14 trees each randomly chosen over the plot. Application of the composition comprising dodine was based on information from the warning system. This system assumes that *Alternaria alternata* is always present and that *Alternaria alternata* grows strongly at certain weather conditions. Application was done on days when the average day temperature were higher than 12.5 °C for longer than one week in a row and when the total amount of rainfall in that week was higher than 2.5 mm. Based on these criteria 5 application dates were generated during the growing season: 13 April, 22 May, 27 Augustus, 26 September and 29 October. See Fig. 1 for temperature and rainfall data.

Fig. 1 represents the weather conditions at the site of the orange plantation. Fig 1A depicts the average day temperature (Y- axis) over the year (X-axis), an average day temperature above 12.5 °C (dark grey) is assumed to be in favour for *Alternaria alternata* to grow. Fig 1B depicts the daily rainfall (Y-axis) over the year (X-axis) and Fig 1C is a zoom in of Fig 1B. The 5 triangles on this graph are the moments of application of the composition comprising dodine.

Each application was done with a composition comprising dodine according to example 2. 200 ml of this suspension concentrate was diluted in 100 l water and from this dilution 4.5 I was applied on each tree.

Harvest of the mandarins was done on 12 December and 100 fruits were selected at random from each tree and analysed according to the international quality standard for citrus established by the Organisation for Economic Co-operation and Development (OECD) in 2010, dividing the citrus fruits into 4 classes based on the damage done by fungal infection. The four classes are: Extra Class, Class 1, Class 2 and out of grade. The results were then statistically analysed and differences in populations were determined via a Student's t-test. The results are discussed in the examples that follow.

### Example 4: sprouts affected by Alternaria alternata

This example is a continuation of the example given in Example 3.

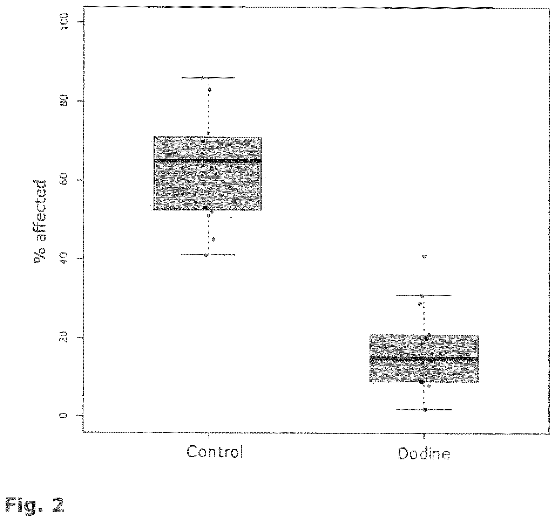

On 22 May, the day of the second application of the composition comprising dodine an analysis was made on the presence of leaf spot disease on the sprouting mandarin trees. For each tree the percentage of sprouts affected by the disease was obtained and is represented in a box plot in Fig. 2.

Fig. 2 is a boxplot of the first analysis of leaf spot disease on the sprouts of the mandarin trees. The fat line in the box represents the mean value of sprouts being affected by *Alternaria alternata,* the bottom line represents the 25 % barrier, meaning that 25 % of the trees has less sprouts affected by *Alternaria alternata* than this value. The top line of the box represents the 75 barrier, meaning that 75 % of the trees have less than this value affected sprouts, the whiskers on the box represent the maximum and the minimum value of sprouts affected by *Alternaria alternata* bearing in mind that extreme values are not taking in account. Out of a Student's t-test follows that the treated and the untreated population are different with a 99.9% probability.

For trees treated with the composition comprising dodine on average 23.16 % of the sprouts were affected compared to the untreated control group where on average 59.58% form the sprouts were affected. These 2 populations were significantly different from each other as the P-value was smaller than 0.01.

### Example 5: Weight of fruits for each tree

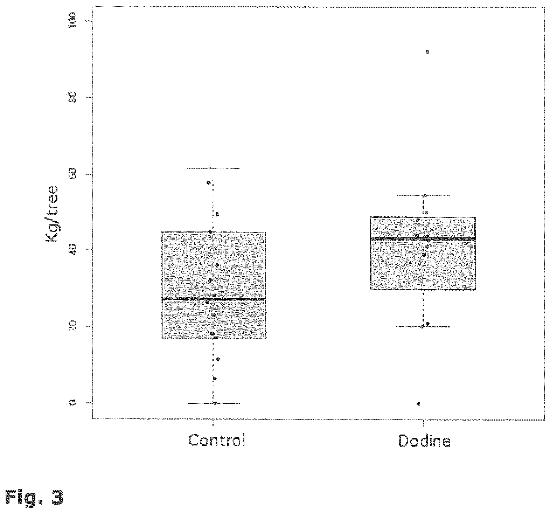

This example is a continuation of the example given in Example 3. On 12 December, the mandarins were harvested and the weight of the fruits for each tree was calculated. The results are represented in a boxplot in Fig. 3.

Fig. 3 is a boxplot of the weight of fruits produced by each tree for the untreated group and the group that was treated with a composition comprising dodine. Each boxplot represents the mean value, the fat line in the box; the 25 % barrier, the bottom line of the box; the 75 % barrier, the top line of the box and the maximum and minimum values without the extreme values represented by the whiskers.

The average weight per tree for the group treated with a composition comprising dodine was 41.41 kg/tree. The average weight per tree for the control group was 28.59 kg/tree.

### Example 6: Classification of fruits

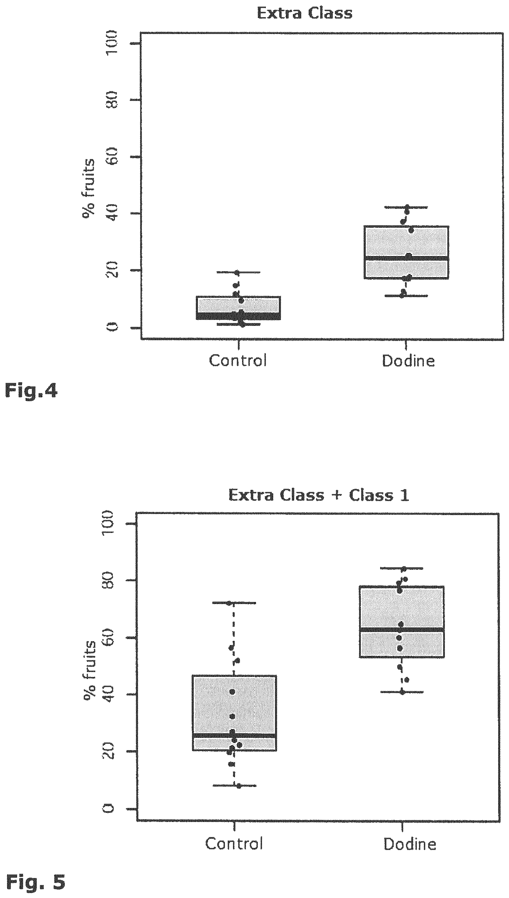

This example is a continuation of the example given in Example 3.
After harvest, 100 fruits from each tree were randomly selected and these selected fruits were divided into the 4 different classes defined by the international quality standard for citrus by the Organisation for Economic Co-operation and Development (OECD) in 2010, see figure 2, based on the damage caused by *Alternaria alternata.* The results are represented in Fig. 4-7.

Fig. 4 is a boxplot of the percentage of fruits classified in the Extra Class for each tree for the untreated group and for the group that was treated with a composition comprising dodine. Each boxplot represents the mean value, the fat line in the box; the 25 % barrier, the bottom line of the box; the 75 % barrier, the top line of the box and the maximum and minimum values without the extreme values represented by the whiskers. The 2 populations are significantly different from each other, P-value smaller than 0.01.

On average 25.58% of the fruits were classified in the Extra Class for the trees treated with a composition comprising dodine compared to on average 6.83% of the fruits produced by the trees in the untreated control group. Out of the Student's t-test on these data results that the 2 populations were different with a 99.9% probability, P-value was smaller than 0.01.

The average percentage of fruits for each tree out of the group that was treated with a composition comprising dodine, classified in the Extra Class or the Class 1 was 63.93 % compared to 32.73 % of the fruits produced by untreated trees from the control group, see Fig. 5.

Fig. 5 is a boxplot of the percentage of fruits classified in the Extra Class and the Class 1 for each tree for the untreated group and for the group that was treated with a composition comprising dodine. Each boxplot represents the mean value, the fat line in the box; the 25 % barrier, the bottom line of the box; the 75 % barrier, the top line of the box and the maximum and minimum values without the extreme values represented by the whiskers. The 2 populations are significantly different from each other, P-value smaller than 0.01.

Out of the Student's t-test on these data results that the 2 populations are different with a 99.9% probability, P-value was smaller than 0.01.

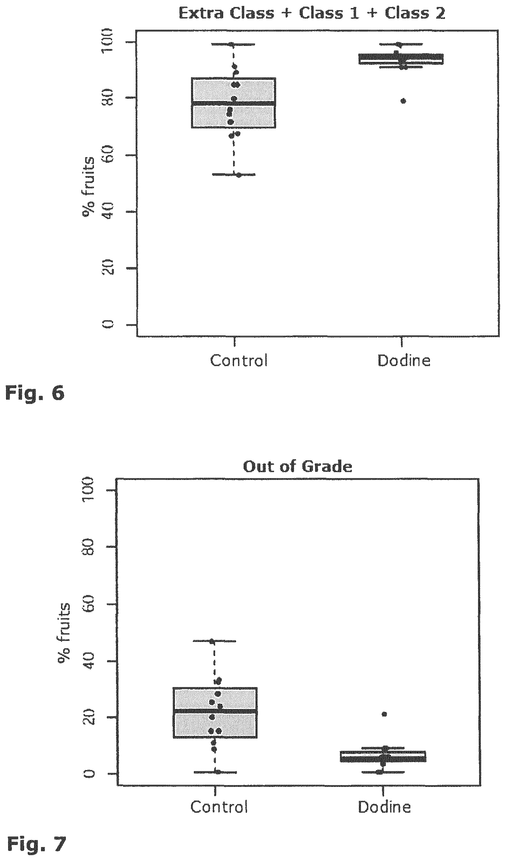

The average percentage of fruits for each tree out of the group that was treated with a composition comprising dodine, classified as marketable fruits, comprising the Extra Class, the Class 1 and Class 2, was 93.31 % compared to 78.18 % of the fruits produced by untreated trees from the control group, see Fig. 6.

Fig. 6 is a boxplot of the percentage of fruits classified as marketable, the Extra Class, Class 1 and Class 2, for each tree for the untreated group and for the group that was treated with a composition comprising dodine. Each boxplot represents the mean value, the fat line in the box; the 25 % barrier, the bottom line of the box; the 75 % barrier, the top line of the box and the maximum and minimum values without the extreme values represented by the whiskers. The 2 populations are significantly different from each other, P-value smaller than 0.01.

Out of the Student's t-test on these data results that the 2 populations were different with a 99.9% probability, P-value was smaller than 0.01.

The average percentage of fruits for each tree out of the group that was treated with a composition comprising dodine, classified as Out of grade was 6.68 % compared to 21.81 % of the fruits produced by untreated trees from the control group, see Fig. 7.

Fig. 7 is a boxplot of the percentage of fruits classified as Out of grade, for each tree for the untreated group and for the group that was treated with a composition comprising dodine. Each boxplot represents the mean value, the fat line in the box; the 25 % barrier, the bottom line of the box; the 75 % barrier, the top line of the box and the maximum and minimum values without the extreme values represented by the whiskers. The 2 populations are significantly different from each other, P-value smaller than 0.01.

Out of the Student's t-test on these data results that the 2 populations are different with a 99.9% probability, P-value is smaller than 0.01.

### Example 7: Determination of ED50

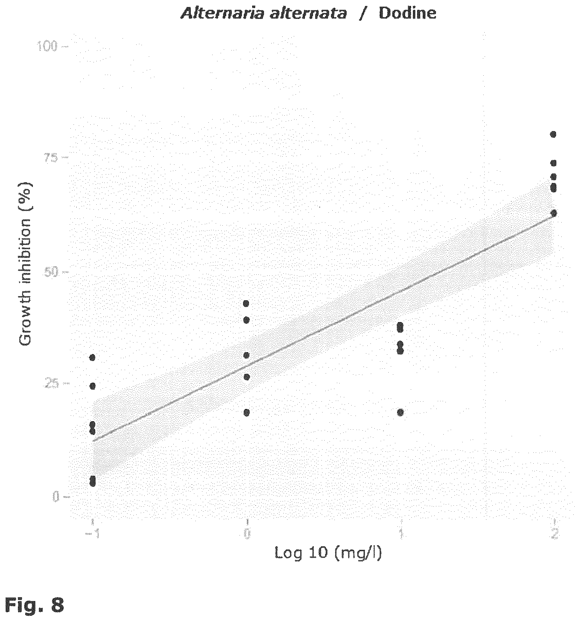

5 times 6 potato dextrose agar plates were made, only differing in the amount of dodine present in the agar plat. The plates contained 6 times 0 mg/l; 0.1 mg/l; 1 mg/l; 10 mg/l and 100 mg/l dodine. In the centre of each plate a 10 mm in diameter agar disk that was colonized with *Alternaria alternata* was added, and the plates were incubated in darkness at 23 °C. Measurement of the mycelial growth over time was conducted and the measurement were represented as percentages compared to the growth in the plate were no dodine was added. Assuming a linear dependence of the mycelial growth and the concentration of dodine, regression determines the effective dose ED50 value, meaning the concentration of dodine that inhibits the growth of *Alternaria alternata* by 50 % compared to the growth when no dodine was added, see Fig. 8.

Fig. 8 is a graphical presentation of the dodine concentration dependence of the growth inhibition of *Alternaria alternata.* In grey is the 95% confidence interval indicated.

The ED50 for Dodine against *Alternaria alternata* was established to range between 10 mg/l and 100 mg/l.

### Example 8: field trial 2014

A field trial was conducted for the control of *Alternaria alternata* on mandarins in Alzira, Valencia, Spain. The product used was Syllit 544 g/l suspension concentrate. Mandarins were harvested and classified using the OECD criteria ( international quality standard for citrus established by the Organisation for Economic Co-operation and Development in 2010).

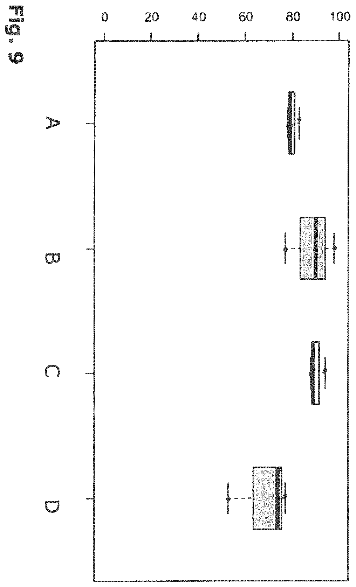

The results obtained are summarized in Figure 9. It can be seen that the treatments with dodine clearly result in a significantly higher percentage of fruit compared to the control group receiving no treatment.

No symptoms of phytotoxicity were observed for dodine.

## Claims

1. A use of dodecytguanidine or salt thereof, preferably dodine, as fungicide for the treatment of *Alternaria* on a citrus plant, wherein dodecylguanidine or salt thereof is applied at an interval of one or more of:
at least two days before or after rainy periods;
applying said dodecylguanidine or salt thereof every month; or
within four days of an *Alternaria* warning on citrus.

2. A use according to claim 1, for the control of *Alternaria alternata* tangerine pathotype or lemon pathotype.

3. A use according to claim 1 or 2, wherein dodine is applied at a dose rate of 300 g to 3000 g dodine per hectare.

4. A use according to claim 1, wherein an effective amount of dodine is comprised in an agrochemical composition,
wherein the dodine is the only antifungal active ingredient in the composition,
wherein said dodine has a median particle diameter (d₅₀) of less than 20 µm, and
wherein the composition is applied at an interval of one or more of:
at least two days before or after rainy periods;
applying said composition every month; or
within four days of an *Alternaria* warning on citrus.

5. A use according to claim 4, wherein the composition is in the form of a suspension concentrate.

6. A use according to claim 4, wherein the composition is a wettable powder or a water dispersible granule formulation.

7. A use according to any one of claims 4 to 6, wherein said dodine has a median particle diameter (d₅₀) of between 7 µm and 20 µm.

8. A use according to any one of claims 4 to 7, wherein the composition comprises:
40 to 80% of dodine,
0 to 10% of an anti-freeze compound,
1 to 10% of a wetting agent and/or a dispersing agent,
0 to 5% of an antifoaming agent,
0 to 5% of a thickener,
0 to 5% of a preservative,
remainder water;
wherein all percentages are expressed by weight based on the total weight of the composition.

9. A use according to any one of claims 4 to 8, wherein the composition comprises an ethoxylated alkylamine and an acrylate graft polymer.

10. Use according to claim 1, wherein dodecylguanidine or salt thereof is applied once every month, one every three weeks, or once every two weeks.

11. Use according to claim 1, wherein the warning is selected from one or more of:
1) the average day temperature in a pre-set period of time prior to the application being higher than 10°C or 12.5°C; and
2) the amount of rainfall in a pre-set period of time prior to the application is higher than 1mm or 2mm or 2.5mm.

12. A method for controlling a plant disease, which comprises applying dodecylguanidine or salt thereof, preferably dodine, to a plant in an effective dose, **characterized in that** said plant disease is *Alternaria* and said plant is a citrus plant, and
wherein dodecylguanidine or salt thereof is applied at an interval of one or more of:
at least two days before or after rainy periods;
applying said dodecylguanidine or salt thereof every month; or
within four days of an *Alternaria* warning on citrus.

13. A method according to claim 12, wherein dodine is comprised in a composition, and the composition is applied on leaves, fruits, blossom or a combination of previous, of said citrus plant.

14. A method according to claim 12 or 13, wherein a total dose of dodine of 300 to 3000 g dodine per hectare is applied.

15. A method according to any one of claims 12 to 14, wherein said dodine is applied within three days of an *Alternaria*-warning on citrus.

16. A method according to any of claims 12 to 15 wherein the dodine is comprised in a composition defined in any of claims 4 to 9.

17. A method according to claim 12, wherein dodecylguanidine or salt thereof is applied once every month, one every three weeks, or once every two weeks.

18. A method according to claim 12, wherein wherein the warning is selected from one or more of:
1) the average day temperature in a pre-set period of time prior to the application being higher than 10°C or 12.5°C; and
2) the amount of rainfall in a pre-set period of time prior to the application is higher than 1mm or 2mm or 2.5mm.

## Patentansprüche

1. Verwendung von Dodecylguanidin oder einem Salz davon, bevorzugt Dodin, als Fungizid für die Behandlung von *Alternaria* auf einer Zitruspflanze, wobei Dodecylguanidin oder ein Salz davon in einem Zeitabstand von einem der mehreren aus Folgendem aufgetragen wird:
mindestens zwei Tage vor oder nach Regenperioden;
Auftragen des Dodecylguanidins oder Salzes davon jeden Monat; oder
innerhalb von vier Tagen einer *Alternaria*-Warnung auf Zitruspflanze.

2. Verwendung nach Anspruch 1 für die Kontrolle von *Alternaria alternata* Pathotyp Mandarine oder Pathotyp Zitrone.

3. Verwendung nach Anspruch 1 oder 2, wobei Dodin in einer Dosisleistung von 300 g bis 3000 g Dodin pro Hektar aufgetragen wird.

4. Verwendung nach Anspruch 1, wobei eine wirksame Menge von Dodin in einer agrochemischen Zusammensetzung enthalten ist,
wobei das Dodin der einzige antifungale Wirkstoff in der Zusammensetzung ist,
wobei das Dodin einen mittleren Teilchendurchmesser (d₅₀) von weniger als 20 µm hat und
wobei die Zusammensetzung in einem Zeitabstand von einem der mehreren aus Folgendem aufgetragen wird:
mindestens zwei Tage vor oder nach Regenperioden;
Auftragen Zusammensetzung jeden Monat; oder
innerhalb von vier Tagen einer *Alternaria*-Warnung auf Zitruspflanze.

5. Verwendung nach Anspruch 4, wobei die Zusammensetzung in der Form eines Suspensionskonzentrats ist.

6. Verwendung nach Anspruch 4, wobei die Zusammensetzung ein benetzbares Pulver oder eine wasserdispergierbare Granulatformulierung ist.

7. Verwendung nach einem der Ansprüche 4 bis 6, wobei das Dodin einen mittleren Teilchendurchmesser (d₅₀) von zwischen 7 µm und 20 µm hat.

8. Verwendung nach einem der Ansprüche 4 bis 7, wobei die Zusammensetzung Folgendes umfasst:
40 bis 80 % Dodin,
0 bis 10 % einer Frostschutzmittelverbindung,
1 bis 10 % eines Netzmittels und/oder Dispergiermittels,
0 bis 5 % eines Antischaummittels,
0 bis 5 % eines Verdickungsmittels,
0 bis 5 % eines Konservierungsmittels,
Rest Wasser;
wobei alle Prozentangaben nach Gewicht ausgedrückt sind, basierend auf dem Gesamtgewicht der Zusammensetzung.

9. Verwendung nach einem der Ansprüche 4 bis 8, wobei die Zusammensetzung ein ethoxyliertes Alkylamin und ein Acrylat-Pfropfpolymer umfasst.

10. Verwendung nach Anspruch 1 wobei Dodecylguanidin oder Salz davon einmal jeden Monat, einmal alle drei Wochen oder einmal alle zwei Wochen aufgetragen wird.

11. Verwendung nach Anspruch 1, wobei die Warnung ausgewählt ist aus einem oder mehreren aus Folgendem:
1) die durchschnittliche Tagestemperatur in einem voreingestellten Zeitraum vor dem Auftrag ist höher als 10 °C oder 12,5 °C; und
2) die Niederschlagsmenge in einem voreingestellten Zeitraum vor dem Auftrag ist höher als 1 mm oder 2 mm oder 2,5 mm.

12. Verfahren zum Kontrollieren einer Pflanzenkrankheit, die das Auftragen von Dodecylguanidin oder einem Salz davon, bevorzugt Dodin, auf einer Pflanze in einer wirksamen Menge umfasst, **dadurch gekennzeichnet, dass** die Pflanzenkrankheit *Alternaria* ist und die Pflanze eine Zitruspflanze ist, und
wobei Dodecylguanidin oder ein Salz davon in einem Zeitabstand von einem der mehreren aus Folgendem aufgetragen wird:
mindestens zwei Tage vor oder nach Regenperioden;
Auftragen des Dodecylguanidins oder Salzes davon jeden Monat; oder
innerhalb von vier Tagen einer *Alternaria*-Warnung auf Zitruspflanze.

13. Verfahren nach Anspruch 12, wobei Dodin in einer Zusammensetzung enthalten ist und die Zusammensetzung auf Blätter, Früchte, Blüte oder eine Kombination des vorherigen der Zitruspflanze aufgetragen wird.

14. Verfahren nach Anspruch 12 oder 13, wobei eine Gesamtdosis von Dodin von 300 g bis 3000 g Dodin pro Hektar aufgetragen wird.

15. Verfahren nach einem der Ansprüche 12 bis 14, wobei das Dodin innerhalb von drei Tagen einer *Alternaria*-Warnung auf Zitruspflanze aufgetragen wird.

16. Verfahren nach einem der Ansprüche 12 bis 15, wobei das Dodin in einer Zusammensetzung enthalten ist, die in einem der Ansprüche 4 bis 9 definiert ist.

17. Verfahren nach Anspruch 12, wobei Dodecylguanidin oder Salz davon einmal jeden Monat, einmal alle drei Wochen oder einmal alle zwei Wochen aufgetragen wird.

18. Verfahren nach Anspruch 12, wobei die Warnung ausgewählt ist aus einem oder mehreren aus Folgendem:
1) die durchschnittliche Tagestemperatur in einem voreingestellten Zeitraum vor dem Auftrag ist höher als 10 °C oder 12,5 °C; und
2) die Niederschlagsmenge in einem voreingestellten Zeitraum vor dem Auftrag ist höher als 1 mm oder 2 mm oder 2,5 mm.

## Revendications

1. Utilisation de la dodécylguanidine ou de son sel, de préférence la dodine, comme fongicide pour le traitement de l'*Alternaria* sur un agrume, dans laquelle la dodécylguanidine ou son sel est appliquée à un intervalle d'un ou plusieurs parmi :
au moins deux jours avant ou après les périodes de pluie ;
l'application de ladite dodécyiguanidine ou son sel chaque mois ; ou
dans les quatre jours suivant un avertissement de l'*Alternaria* sur les agrumes.

2. Utilisation selon la revendication 1, pour le pathotype de tangerine ou pathotype de citron *Alternaria alternata.*

3. Utilisation selon la revendication 1 ou 2, dans laquelle la dodine est appliquée à un débit de dose de 300 g à 3000 g de dodine par hectare.

4. Utilisation selon la revendication 1, dans laquelle une quantité efficace de dodine est comprise
dans une composition agrochimique,
dans laquelle la dodine est le seul ingrédient actif antifongique dans la composition,
dans laquelle ladite dodine a un diamètre de particule médian (d₅₀) inférieur à 20 µm, et
dans laquelle la composition est appliquée à un intervalle d'un ou plusieurs parmi :
au moins deux jours avant ou après des périodes de pluie ;
l'application ladite composition tous les mois ; ou
dans les quatre jours suivant un avertissement de l'*Alternaria* sur les agrumes.

5. Utilisation selon la revendication 4, dans laquelle la composition est sous la forme d'un concentré en suspension.

6. Utilisation selon la revendication 4, dans laquelle la composition est une poudre mouillable ou une formulation de granulés dispersibles dans l'eau.

7. Utilisation selon l'une quelconque des revendications 4 à 6, dans laquelle ladite dodine a un diamètre de particule médian (d₅₀) compris entre 7 µm et 20 µm.

8. Utilisation selon l'une quelconque des revendications 4 à 7, dans laquelle la composition comprend :
40 à 80% de dodine,
0 à 10% d'un composé antigel,
1 à 10% d'un agent mouillant et / ou d'un agent dispersant,
0 à 5% d'un agent anti-mousse,
0 à 5% d'un épaississant,
0 à 5% d'un conservateur,
le reste étant de l'eau ;
dans laquelle tous les pourcentages sont exprimés en poids sur la base du poids total de la composition.

9. Utilisation selon l'une quelconque des revendications 4 à 8, dans laquelle la composition comprend une alkylamine éthoxylée et un polymère greffé d'acrylate.

10. Utilisation selon la revendication 1, dans laquelle la dodécylguanidine ou son sel est appliquée une fois par mois, une fois toutes les trois semaines ou une fois toutes les deux semaines.

11. Utilisation selon la revendication 1, dans laquelle l'avertissement est choisi parmi un ou plusieurs de :
1) la température journalière moyenne dans une période de temps prédéfinie avant l'application étant supérieure à 10 °C ou 12,5 °C ; et
2) la quantité de pluie dans une période de temps prédéfinie avant l'application est supérieure à 1 mm ou 2 mm ou 2,5 mm.

12. Procédé pour lutter contre une maladie des plantes, qui comprend l'application de la dodécylguanidine ou de son sel, de préférence la dodine, à une plante à une dose efficace, **caractérisé en ce que** ladite maladie des plantes est l'*Alternaria* et ladite plante est un agrume, et
dans lequel la dodécylguanidine ou son sel est appliqué à un intervalle d'un ou plusieurs parmi :
au moins deux jours avant ou après les périodes de pluie ;
l'application de ladite dodécyiguanidine ou son sel chaque mois ; ou
dans les quatre jours suivant un avertissement de l'*Alternaria* sur les agrumes.

13. Procédé selon la revendication 12, dans lequel la dodine est comprise dans une composition, et la composition est appliquée sur des feuilles, des fruits, des fleurs ou une combinaison de ceux-ci, dudit agrume.

14. Procédé selon la revendication 12 ou 13, dans lequel une dose totale de dodine de 300 à 3000 g par hectare est appliquée.

15. Procédé selon l'une quelconque des revendications 12 à 14, dans lequel ladite dodine est appliquée dans les trois jours suivant un avertissement de l'*Alternaria* sur les agrumes.

16. Procédé selon l'une quelconque des revendications 12 à 15, dans lequel la dodine est comprise dans une composition définie dans l'une quelconque des revendications 4 à 9.

17. Procédé selon la revendication 12, dans lequel la dodécylguanidine ou son sel est appliquée une fois par mois, une fois toutes les trois semaines ou une fois toutes les deux semaines.

18. Procédé selon la revendication 12, dans lequel l'avertissement est choisi parmi un ou plusieurs de :
1) la température journalière moyenne dans une période de temps prédéfinie avant l'application étant supérieure à 10 ° C ou 12,5 ° C ; et
2) la quantité de pluie dans une période de temps prédéfinie avant l'application est supérieure à 1 mm ou 2 mm ou 2,5 mm.
